# EUROPÄISCHE PATENTSCHRIFT

(11) **EP 1 109 700 B1**
(45) Veröffentlichungstag und Bekanntmachung des Hinweises auf die Patenterteilung: **12.11.2008**
(21) Anmeldenummer: 00929515.5
(22) Anmeldetag: 10.05.2000
(51) Int. Cl.: B60Q 1/00

(54) **VERFAHREN UND VORRICHTUNG ZUM AUTOMATISCHEN EIN- ODER AUSSCHALTEN DER BELEUCHTUNG EINES FAHRZEUGS**
METHOD AND DEVICE FOR AUTOMATICALLY SWITCHING ON OR OFF THE LIGHTS OF A VEHICLE
PROCEDE ET DISPOSITIF POUR L'ALLUMAGE OU L'EXTINCTION AUTOMATIQUE DES FEUX D'UN VEHICULE

(30) Priorität: 18.05.1999 DE 19922687
(43) Veröffentlichungstag der Anmeldung: 27.06.2001
(73) Patentinhaber: Valeo Wischersysteme GmbH, 74321 Bietigheim-Bissingen (DE)
(72) Erfinder: SCHULER, Thomas, D-75444 Wiernsheim (DE)
(74) Vertreter: Jahn, Wolf-Diethart
(86) Internationale Anmeldenummer: PCT/EP2000/004170
(87) Internationale Veröffentlichungsnummer: WO 2000/069679

(56) Entgegenhaltungen:
- DE-A- 19 523 262
- DE-A- 19 704 818

## Beschreibung

Die Erfindung betrifft ein Verfahren und eine Vorrichtung zum automatischen Ein- oder Ausschalten der Beleuchtung eines Fahrzeugs nach dem Oberbegriff des Anspruchs 1.

Ein derartiges Verfahren sowie die die dazugehörige Vorrichtung ist aus der DE 195 23 262 A1 bekannt. Die bekannte Vorrichtung umfasst einen so genannten Globalsensor zur Erfassung des Umgebungslichts des Fahrzeugs sowie wenigstens einen Richtungssensor zur Erfassung des Lichts in Fahrtrichtung. Die Sensoren sind mit einer Auswerteschaltung verbunden, die die Signale der Sensoren empfängt und die die Beleuchtungsanlage des Fahrzeugs ansteuert. Mittels der bekannten Vorrichtung bzw. deren Steuerung zum Ein- und Ausschalten sollen in Fahrtrichtung vor dem Fahrzeug liegende Tunnel, Unterführungen oder ähnliches besser erkannt und klassifiziert werden, so dass ein zielgerichtetes Ein- und Ausschalten der Beleuchtungsanlage erfolgt. Insbesondere soll beispielsweise bei kürzeren Unterführungen oder Brückendurchfahrten ein Einschalten der Beleuchtungsanlage vermieden werden sowie bei entsprechend längeren Unterführungen oder Brückendurchfahrten soll ein rechtzeitiges Einschalten der Beleuchtungsanlage erfolgen. Genaue Angaben hinsichtlich der Anordnung und Ausbildung der Sensoren, insbesondere beim Vorhandensein mehrerer Richtungssensoren, sind der DE 195 23 262 A1 nicht zu entnehmen.

Aufgabe der Erfindung ist es, das bekannte Verfahren derart weiterzubilden, dass eine noch bessere Erkennung von in Fahrtrichtung vor dem Fahrzeug liegenden Hinternissen wie Tunneln, Unterführungen ermöglicht wird, um eine noch bessere Steuerung der Beleuchtungsanlage zu ermöglichen. Diese Aufgabe wird bei den verschiedenen Varianten des Verfahrens mit den Merkmalen des Anspruchs 1 gelöst. Eine Vorrichtung zur Durchführung der erfindungsgemäßen Verfahren zum Ein- und Ausschalten der Beleuchtung eines Fahrzeugs ist in Anspruch 3 angegeben.

Durch die in den Unteransprüchen aufgeführten Merkmale werden die erfindungsgemäßen Verfahren bzw. die erfindungsgemäße Vorrichtung weitergebildet.

Nach einer vorteilhaften Ausgestaltung der Erfindung ist der Kegelwinkel des ersten Kegels größer 10°, so daß ein ausreichend großer Teil des Umgebungslichts zur Ermittlung des Helligkeitswerts *H*₁ herangezogen wird.

Nach einer weiteren vorteilhaften Ausgestaltung der Erfindung beträgt der Kegelwinkel des ersten Kegels 28°, so daß noch eine gewisse Selektion des Umgebungslichts zur Ermittlung des Helligkeitswerts *H*₁ vorgenommen wird.

Nach einer weiteren vorteilhaften Ausgestaltung der Erfindung ist der Kegelwinkel des zweiten und/oder dritten Kegels kleiner 5°, insbesondere 1,2°, so daß eine gerichtete bzw. nahezu punktförmige Ermittlung der Helligkeitswerte *H*₂ und/oder *H*₃ erfolgt.

Bei einer weiteren Ausgestaltung der Erfindung verlaufen die Längsachsen des ersten und des zweiten Kegels parallel und es ergibt sich der Vorteil, daß die Lichtsensoren parallel zueinander angeodnet werden können.

Eine andere Ausführungsform sieht vor, daß der Winkel zwischen den Längsachsen des zweiten und dritten Kegels kleiner 5° ist, so daß der Helligkeitswert *H*₃ schon lange bevor das Fahrzeug in einen Tunnel einfährt oder eine Brücke unterquert abnimmt.

Nach einer weiteren vorteilhaften Ausgestaltung der Erfindung ist Δ*H*_{min,1} das Produkt eines Faktors zwischen null und eins mit dem Helligkeitswert *H*₁, so daß die Umgebungshelligkeit Einfluß auf das Einschalten der Fahrzeugbeleuchtung hat.
Damit werden die Unterschiede der Helligkeit eines wolkenlosen Sommertags und eines wolkenverhangenen Wintertags berücksichtigt.

Nach einer weiteren vorteilhaften Ausgestaltung der Erfindung ist Δ*H*_{min,2} das Produkt eines Faktors zwischen null und eins mit dem Helligkeitswert *H*₂, so daß die Helligkeit eines vor dem Fahrzeug liegenden Bereichs Einfluß auf das Einschalten der Fahrzeugbeleuchtung hat.

Nach einer weiteren vorteilhaften Ausgestaltung der Erfindung sind der Helligkeitswert *H*_{min,1} und der Helligkeitswert *H*_{min,2} frei wählbar, so daß der Benutzer der Vorrichtung das Ein- oder Ausschalten der Fahrzeugbeleuchtung an seine individuellen Bedürfnisse anpassen kann.

Nach einer weiteren vorteilhaften Ausgestaltung der Erfindung werden die Helligkeitswerte *H*₁, *H*₂ und *H*₃ in einem Zeitabstand Δ*T* ausgewertet, so daß die Datenmenge verringert und die Durchführung der erfindungsgemäßen Verfahren erleichtert wird.
Die eingangs genannte Aufgabe wird außerdem mit einemFahrzeug mit einer erfindungsgemäßen Vorrichtung bei dem die Längsachsen des ersten und zweiten Kegels in Richtung der Fahrzeuglängsachse verlaufen und bei dem die Längsachse des dritten Kegels in der Draufsicht in Richtung der Fahrzeuglängsachse verläuft gelöst.

Dieses Fahrzeug hat den Vorteil, daß die erfindungsgemäße Vorrichtung starr mit dem Fahrzeug verbunden werden kann und somit eine hohe Ausfallsicherheit gewährleistet ist.

Nach einer weiteren vorteilhaften Ausgestaltung der Erfindung verlaufen die Längsachsen des ersten und zweiten Kegels in Fahrtrichtung des Fahrzeugs und verläuft die Längsachse des dritten Kegels in der Draufsicht in Fahrtrichtung, so daß die Helligkeit in Fahrtrichtung ermittelt wird, was bei kurviger Fahrbahn, insbesondere, wenn ein Tunnelanfang oder ein Tunnelausgang in einer Kurve liegt, von Vorteil ist.

Eine andere Variante sieht vor, daß die Längsachsen des ersten und zweiten Kegels in der Rollrichtung der gelenkten Räder verlaufen und, daß die Längsachse des dritten Kegels in der Draufsicht in der Rollrichtung der gelenkten Räder verläuft, so daß die Nachführung der erfindungsgemäßen Vorrichtung bei Richtungsänderungen des Fahrzeugs einfach und kostengünstig möglich ist.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im folgenden näher beschrieben.

Es zeigen:
- Figur 1: ein mit einer erfindungsgemäßen Vorrichtung ausgestattetes Fahrzeug,
- Figur 2: ein Fahrzeug nach Figur 1 bei der Anfahrt auf einen Tunnel und
- Figur 3: ein Fahrzeug nach Figur 1 bei der Anfahrt auf eine quer über die Fahrbahn verlaufende Brücke.

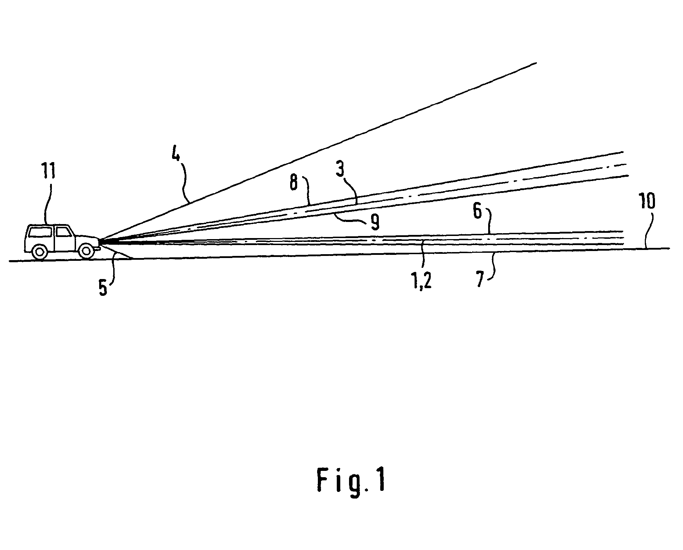

In Figur 1 ist ein Fahrzeug 11 dargestellt, welches sich auf einer Fahrbahn 10 bewegt. An der Vorderseite des Fahrzeugs 11 ist eine nicht näher dargestellte erfindungsgemäße Vorrichtung zum automatischen Ein- oder Ausschalten der Fahrzeugbeleuchtung installiert. Weiter sind drei Kegel dargestellt, innerhalb derer drei Lichtsensoren die Helligkeit ermitteln. Diese Kegel sind durch je eine Längsachse 1, 2 und 3 für den ersten, zweiten und dritten Kegel sowie die Mantellinien 4 und 5 des ersten, 6 und 7 des zweiten sowie 8 und 9 des dritten Kegels kenntlich gemacht. Es ist ohne weiteres denkbar, anstelle der Kegel innerhalb derer die Helligkeit von den Lichtsensoren ermittelt wird, die Helligkeit eines Punktes zu ermitteln. In diesem Fall beträgt der Kegelwinkel 0°. Bei der in Fig. 1 dargestellten Fahrt des Fahrzeugs 11 auf offener Straße ermitteln alle drei Sensoren in etwa die gleiche Helligkeit. Sobald die ermittelten Helligkeitswerte beispielsweise wegen der einsetzenden Dämmerung oder weil sich das Fahrzeug 11 in einer Tiefgarage befindet unter einen vorgegebenen Mindesthelligkeitswert *H*_{min,1} absinken, wird die Fahrzeugbeleuchtung gemäß der ersten Einschaltbedingung der Verfahrensansprüche eingeschaltet. Steht das Fahrzeug mit eingeschalteter Zündung in einem Stau, wird bei einsetzender Dämmerung wegen der dritten Einschaltbedingung der Verfahrensansprüche die Fahrzeugbeleuchtung eingeschaltet. Wenn das Fahrzeug 11 in der Nacht benutzt wird, bleibt die Fahrzeugbeleuchtung dauerhaft eingeschaltet, da keine der in den Verfahrensansprüchen festgelegten Ausschaltbedingungen erfüllt ist. Erst, wenn die Helligkeit in der Umgebung des Fahrzeugs 11 während des Zurücklegens einer bestimmten, nicht dargestellten Fahrstrecke *S*₁ oder während einer gewissen Zeit oberhalb eines Mindestwerts *H*_{min,2} liegt, wird die Fahrzeugbeleuchtung ausgeschaltet.

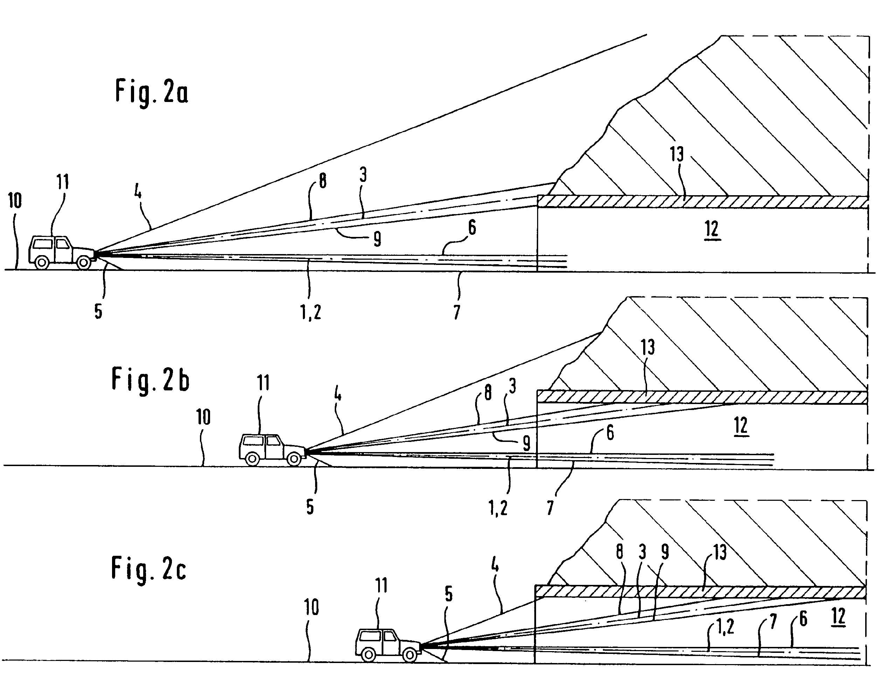

In Figur 2 wird die Fahrt eines Fahrzeugs 11 in Richtung auf einen Tunnel 12 in drei Stadien dargestellt. In Figur 2a ist das Fahrzeug 11 noch weit vom Tunneleingang entfernt. Deshalb ermitteln der erste und der dritte Lichtsensor noch die Helligkeit in der Umgebung des Fahrzeugs 11. Lediglich der zweite Lichtsensor, der die Helligkeit innerhalb des von den Mantellinien 6 und 7 begrenzten Kegels erfasst, ermittelt bereits die gegenüber der Umgebung stark herabgesetzte Helligkeit im Innern des Tunnels 12. In Fig. 2b ist das Fahrzeug 11 bereits näher an den Tunneleingang herangefahren. Deshalb trifft der von den Mantellinien 8 und 9 begrenzte Kegel, innerhalb dessen die Helligkeit vom dritten Lichtsensor erfasst wird, auf die Tunneldecke 13, so daß auch der dritte Lichtsensor die gegenüber der Helligkeit in der Umgebung des Fahrzeugs stark verringerte Helligkeit der Tunneldecke ermittelt. Wenn dieser Zustand länger anhält als es der Fahrstrecke *S*₁ entspricht, wird die Fahrzeugbeleuchtung gemäß der zweiten Einschaltbedinung eingeschaltet. Die Fahrstrecke *S*₁ entspricht etwa der Breite 15 einer zu unterquerenden Brücke 14, so daß unerwünschte Ein- oder Ausschaltvorgänge beim Unterqueren einer Brücke 14 verhindert werden.

Das Einschalten der Fahrzeugbeleuchtung erfolgt bereits vor der Einfahrt in den Tunnel 12, da aufgrund der geringen Steigung, welche die Längsachse 3 des dritten Kegels gegenüber der Fahrbahn 10 hat, der dritte Lichtsensor bereits lange bevor das Fahrzeug 11 den Tunnel 12 erreicht die Helligkeit der Tunneldecke 13 ermittelt. Dies wird durch den Vergleich der Figuren 2b und 2c veranschaulicht. In Figur 2c ist das Fahrzeug 11 so nahe an den Tunneleingang herangefahren, daß auch der erste Lichtsensor die Helligkeit des Tunnels 12 ermittelt und somit spätestens in diesem Moment das Einschalten der Fahrzeugbeleuchtung eingeleitet wird.

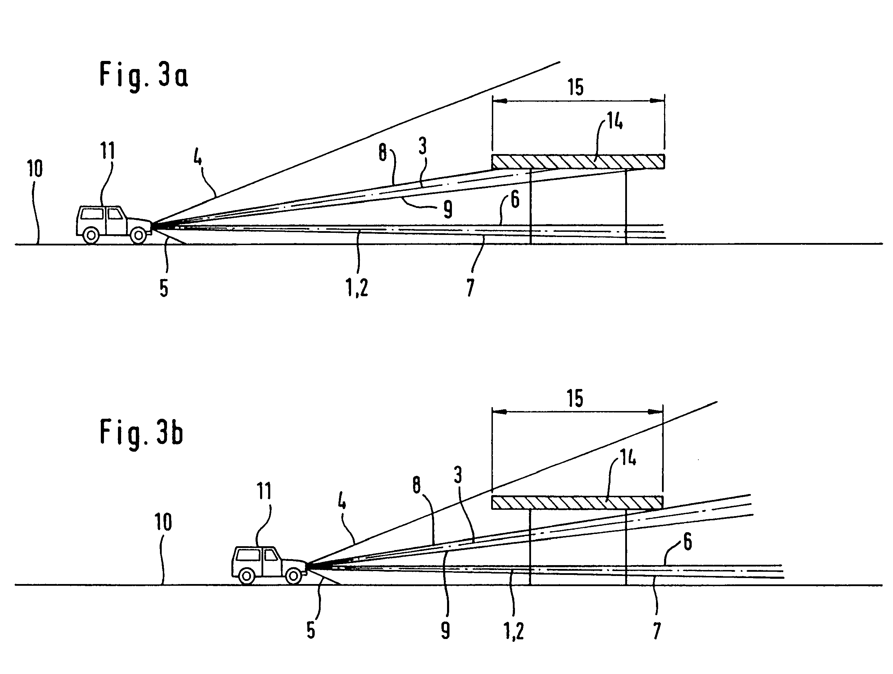

In Figur 3 ist eine Situation dargestellt bei der ein mit einer erfindungsgemäßen Vorrichtung ausgerüstetes Fahrzeug 11 unter einer quer über die Fahrbahn verlaufenden Brücke 14 hindurchfährt. Die Situation in Fig. 3a ist vergleichbar mit der in Fig. 2b dargestellten Situation. Die Lichtsensoren 2 und 3 ermitteln bereits eine gegenüber der Helligkeit der Umgebung reduzierte Helligkeit, allerdings hält dieser Zustand nur während einer Strecke an, die der Breite 15 der zu unterquerenden Brücke 14 entspricht, da danach der Lichtsensor 3 bereits wieder die Helligkeit der Umgebung ermittelt. Dies ist in Figur 3b veranschaulicht. Da bei der Anfahrt und dem Unterqueren einer quer über die Fahrbahn 10 verlaufenden Brücke 14 keine der Einschaltbedingungen nach einem der erfindungsgemäßen Verfahren erfüllt ist, wird die Fahrzeugbeleuchtung nicht eingeschaltet.

Das erfindungsgemäße Verfahren ist nicht auf das Ein- und Ausschalten der Fahrzeugbeleuchtung beschränkt. Es kann vielmehr auch benutzt werden, um andere Funktionen des Fahrzeugs 11 zu steuern. So kann beispielsweise bei der Einfahrt in einen Tunnel 14 die Fahrzeugbelüftung abgeschaltet oder auf Umluftbetrieb umgeschaltet werden oder das Autoradio auf Cassetten- oder CD-Betrieb umgeschaltet werden.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verfahre zum automatischen Ein- oder Ausschalten der Beleuchtung eines Fahrzeugs (11), bei dem innerhalb eines in Fahrtrichtung vor dem Fahrzeug liegenden ersten Kegels mit großem Kegelwinkel, dessen Spitze im Fahrzeug (11) liegt eine durchschnittliche Helligkeit H1 ermittelt wird, und bei dem in einem zweiten Kegel, dessen Spitze ebenfalls im Fahrzeug (11) liegt, dessen zweiter Kegel in Fahrtrichtung vor dem Fahrzeug (11) liegt, und dessen Kegelwinkel kleiner ist als der erste Kegelwinkel, eine durchschnittliche Helligkeit H2 ermittelt wird und bei dem beim Unterschreiten bzw. Überschreiten der ermittelten durchschnittlichen Helligkeitswerte die Fahrzeugbeleuchtung ein- bzw. ausgeschaltet wird,
**dadurch gekennzeichnet, dass**
die durchschnittliche Helligkeit H3 innerhalb eines in Fahrtrichtung vor dem Fahrzeug liegenden dritten Kegels, dessen Spitze im Fahrzeug (11) liegt ermittelt wird, dass der dritte Kegelwinkel kleiner ist als der erste Kegelwinkel, dass die Längsachse (3) des dritten Kegels in der Seitenansicht gegenüber der Längsachse (2) des zweiten Kegels in Fahrtrichtung ansteigt, dass die Mantelfläche (8, 9) des dritten Kegels außerhalb seiner Spitze sich innerhalb der Mantelfläche (4, 5) des ersten Kegels befindet, dass die Fahrzeuggeschwindigkeit ermittelt wird,
dass die Fahrzeugbeleuchtung eingeschaltet wird, wenn
- die Fahrgeschwindigkeit größer Null ist und die Helligkeitswerte H₁, H₂ und H₃ während einer Fahrtstrecke S₁ einen Mindestwert H_{min,1} unterschreiten oder
- die Fahrgeschwindigkeit größer null ist und der Helligkeitswert H₂ um einen Betrag ΔH_{min,1} kleiner als der Helligkeitswert H₁ ist und während einer Fahrstrecke S₁ der Helligkeitswert H₃ um weniger als einen Betrag ΔH_{min,2} größer als der Helligkeitswert H₂ ist, oder
- die Fahrgeschwindigkeit gleich null ist, die Zündung eingeschaltet ist und die Helligkeitswerte H₁, H₂ und H₃ während eines Zeitintervalls ΔT_{min,1} einen Mindestwert H_{min,1} unterschreiten,
oder dass die Fahrzeugbeleuchtung eingeschaltet wird, wenn
- die Fahrgeschwindigkeit größer Null ist und die Mittelwerte der Helligkeitswerte H₁, H₂ und H₃ während einer Fahrtstrecke S₁ einen Mindestwert H_{min,1} unterschreiten oder
- die Fahrgeschwindigkeit größer null ist und der Mittelwert des Helligkeitswerts H₂ um einen Betrag ΔH_{min,1} kleiner als der Mittelwert des Helligkeitswerts H₁ ist und während einer Fahrstrecke S₁ der Mittelwert des Helligkeitswerts H₃ um weniger als einen Betrag ΔH_{min,2} größer als der Mittelwert des Helligkeitswerts H₂ ist, oder
- die Fahrgeschwindigkeit gleich null ist, die Zündung eingeschaltet ist und die Mittelwerte der Helligkeitswerte H₁, H₂ und H₃ während eines Zeitintervalls ΔT_{min,1} einen Mindestwert H_{min,1} unterschreiten,
oder dass die Fahrzeugbeleuchtung eingeschaltet wird, wenn
- die Fahrgeschwindigkeit größer Null ist der aus den Helligkeitswerten H₁, H₂ und H₃ gebildete Mittelwert während einer Fahrtstrecke S₁ einen Mindestwert H_{min,1} unterschreitet oder
- die Fahrgeschwindigkeit größer null ist und der Mittelwert des Helligkeitswerts H₂ um einen Betrag ΔH_{min,1} kleiner als der Mittelwert des Helligkeitswerts H₁ ist und während einer Fahrstrecke S₁ der Mittelwert des Helligkeitswerts H₃ um weniger als einen Betrag ΔH_{min,2} größer als der Mittelwert des Helligkeitswerts H₂ ist, oder
- die Fahrgeschwindigkeit gleich null ist, die Zündung eingeschaltet ist und der aus den Helligkeitswerten H₁, H₂ und H₃ gebildete Mittelwert während eines Zeitintervalls ΔT_{min,1} einen Mindestwert H_{min,1} unterschreitet,
und dass die Fahrzeugbeleuchtung ausgeschaltet wird, wenn
die Fahrgeschwindigkeit größer null ist und die Helligkeitswerte H₁, H₂ und H₃ während einer Fahrstrecke S₁ einen Mindestwert H_{min,2} überschreiten, oder
- die Fahrgeschwindigkeit gleich null ist, die Zündung eingeschaltet ist und die Helligkeitswerte H₁, H₂ und H₃ während eines Zeitintervalls ΔT_{min,2} einen Mindestwert H_{min,2} überschreiten,
oder dass die Fahrzeugbeleuchtung ausgeschaltet wird, wenn
die Fahrgeschwindigkeit größer null ist und die Mittelwerte der Helligkeitswerte H₁, H₂ und H₃ während einer Fahrstrecke S₁ einen Mindestwert H_{min,2} überschreiten, oder
- die Fahrgeschwindigkeit gleich null ist, die Zündung eingeschaltet ist und die Mittelwerte der Helligkeitswerte H₁, H₂ und H₃ während eines Zeitintervalls ΔT_{min,2} einen Mindestwert H_{min,2} überschreiten,
oder dass die Fahrzeugbeleuchtung ausgeschaltet wird, wenn
die Fahrgeschwindigkeit größer null ist und der aus den Helligkeitswerten H₁, H₂ und H₃ gebildete Mittelwert während einer Fahrstrecke S₁ einen Mindestwert H_{min,2} überschreitet, oder
- die Fahrgeschwindigkeit gleich null ist, die Zündung eingeschaltet ist und der aus den Helligkeitswerten H₁, H₂ und H₃ gebildete Mittelwert während eines Zeitintervalls ΔT_{min,2} einen Mindestwert H_{min,2} überschreitet.

2. Verfahren nach Anspruch 1, **dadurch gekennzeichnet, dass** der aus den Helligkeitswerten H₁, H₂ und H₃ gebildete Mittelwert gewichtet ist und dass dem Helligkeitswert H₁ dabei das größte Gewicht zukommt.

3. Vorrichtung zur Durchführung eines Verfahrens nach einem der vorhergehenden Ansprüche mit einem ersten Lichtsensor, der die durchschnittliche Helligkeit in der Umgebung des Fahrzeugs (11) ermittelt, einem zweiten Lichtsensor, der die durchschnittliche Helligkeit in Fahrtrichtung (11) ermittelt, wobei der erste Lichtsensor die durchschnittliche Helligkeit H₁ innerhalb eines Kegels mit einem großen Kegelwinkel eintretenden Lichtstrahlen ermittelt, wobei der zweite Lichtsensor die durchschnittliche Helligkeit H₂ der innerhalb eines Kegels mit einem kleinen Kegelwinkel eintretenden Lichtstrahlen ermittelt, und mit einem Lichtsteuergerät welches die Fahrzeugbeleuchtung ein- und ausschaltet, **dadurch gekennzeichnet, dass** die Mantelfläche (6, 7) des zweiten Kegels außerhalb seiner Kegelspitze innerhalb der Mantelfläche (4, 5) des ersten Kegels liegt, dass ein dritter Lichtsensor vorhanden ist, der die durchschnittliche Helligkeit H₃ der innerhalb eines Kegels mit einem kleinen Kegelwinkel eintretenden Lichtstrahlen ermittelt, dass die Mantelfläche (8, 9) des dritten Kegels außerhalb seiner Kegelspitze innerhalb der Mantelfläche (4, 5) des ersten Kegels liegt, dass die Längsachsen (2, 3) des zweiten und des dritten Kegels einen kleinen Winkel aufspannen und dass das Lichtsteuergerät die Fahrzeugbeleuchtung nach einem Verfahren nach einem der vorhergehenden Ansprüche ein- und ausschaltet.

4. Vorrichtung nach Anspruch 3, **dadurch gekennzeichnet, daß** der Kegelwinkel des ersten Kegels größer 10° ist.

5. Vorrichtung nach einem der Ansprüche 3 oder 4, **dadurch gekennzeichnet, daß** der Kegelwinkel des ersten Kegels 28° beträgt.

6. Vorrichtung nach einem der Ansprüche 3 bis 5, **dadurch gekennzeichnet, daß** der Kegelwinkel des zweiten Kegels kleiner 5 ° ist.

7. Vorrichtung nach einem der Ansprüche 5 bis 6, **dadurch gekennzeichnet, daß** der Kegelwinkel des zweiten Kegels 1,2° beträgt.

8. Vorrichtung nach einem der Ansprüche 3 bis 7, **dadurch gekennzeichnet, daß** der Kegelwinkel des dritten Kegels kleiner 5° ist.

9. Vorrichtung nach einem der Ansprüche 3 bis 8, **dadurch gekennzeichnet, daß** der Kegelwinkel des dritten Kegels 1,2° beträgt.

10. Vorrichtung nach einem der Ansprüche 3 bis 9, **dadurch gekennzeichnet, daß** die Längsachsen des ersten und des zweiten Kegels parallel verlaufen.

11. Vorrichtung nach einem der Ansprüche 3 bis 10, **dadurch gekennzeichnet, daß** der Winkel zwischen den Längsachsen des zweiten und dritten Kegels kleiner 5 ° ist.

12. Vorrichtung nach einem der Ansprüche 3 bis 11, **dadurch gekennzeichnet, daß** Δ*H*_{min,1} das Produkt eines Faktors zwischen null und eins mit dem Helligkeitswert *H*₁ ist.

13. Vorrichtung nach einem der Ansprüche 3 bis 12, **dadurch gekennzeichnet, daß** Δ*H*_{min,2} das Produkt eines Faktors zwischen null und eins mit dem Helligkeitswert *H*₂ ist.

14. Vorrichtung nach einem der Ansprüche 3 bis 13, **dadurch gekennzeichnet, daß** der Helligkeitswert *H*_{min,1} und der Helligkeitswert *H*_{min,2} frei wählbar sind.

15. Vorrichtung nach einem der Ansprüche 3 bis 14 **dadurch gekennzeichnet, daß** die Helligkeitswerte *H*₁, *H*₂ und *H*₃ in einem Zeitabstand Δ*T* ausgewertet werden.

16. Fahrzeug mit einer Vorrichtung nach einem der Ansprüche 3 bis 15, **dadurch gekennzeichnet, daß** die Längsachsen des ersten und zweiten Kegels in Richtung der Fahrzeuglängsachse verlaufen und, daß die Längsachse des dritten Kegels in der Draufsicht in Richtung der Fahrzeuglängsachse verläuft.

17. Fahrzeug mit einer Vorrichtung nach einem der Ansprüche 3 bis 15, **dadurch gekennzeichnet, daß** die Längsachsen des ersten und zweiten Kegels in Fahrtrichtung verlaufen und, daß die Längsachse des dritten Kegels in der Draufsicht in Fahrtrichtung verläuft.

18. Fahrzeug mit einer Vorrichtung nach einem der Ansprüche 3 bis 15, **dadurch gekennzeichnet, daß** die Längsachsen des ersten und zweiten Kegels in der Rollrichtung der gelenkten Räder verlaufen und, daß die Längsachse des dritten Kegels in der Draufsicht in der Rollrichtung der gelenkten Räder verläuft.

## Claims

1. Method for automatically switching the lights of a vehicle (11) on or off, in which an average brightness H1 is determined inside a first cone lying in front of the vehicle in the driving direction and having a large cone angle, the apex of which is located in the vehicle (11), and in which an average brightness H2 is determined in a second cone whose apex is also located in the vehicle (11), whose second cone lies in front of the vehicle (11) in the driving direction and whose cone angle is less than the first cone angle, and in which the vehicle lights are switched on or off when the ascertained average brightness values fall below or exceed,
**characterized in that**
the average brightness H3 is determined inside a third cone lying in front of the vehicle in the driving direction, the apex of which is located in the vehicle (11), **in that** the third cone angle is less than the first cone angle, **in that** the longitudinal axis (3) of the third cone in side view rises relative to the longitudinal axis (2) of the second cone in the driving direction, **in that** the lateral surface (8, 9) of the third cone outside its apex lies inside the lateral surface (4, 5) of the first cone, **in that** the vehicle speed is determined,
**in that** the vehicle lights are switched on when
- the vehicle speed is greater than zero and the brightness values H₁, H₂ and H₃ fall below a minimum value H_{min,1} within a driving distance S₁ or
- the vehicle speed is greater than zero and the brightness value H₂ is less than the brightness value H₁ by an amount ΔH_{min,1} and within a driving distance S₁ the brightness value H₃ is more than the brightness value H₂ by less than an amount ΔH_{min,2}, or
- the driving speed is equal to zero, the ignition is switched on and the brightness values H₁, H₂ and H₃ fall below a minimum value H_{min,1} during a time interval ΔT_{min,1},
or **in that** the vehicle lights are switched on when
- the vehicle speed is greater than zero and the average values of the brightness values H₁, H₂ and H₃ fall below a minimum value H_{min,1} within a driving distance S₁ or
- the vehicle speed is greater than zero and the average value of the brightness value H₂ is less than the average value of the brightness value H₁ by an amount ΔH_{min,1} and within a driving distance S₁ the average value of the brightness value H₃ is more than the average value of the brightness value H₂ by less than an amount ΔH_{min,2}, or
- the driving speed is equal to zero, the ignition is switched on and the average values of the brightness values H₁, H₂ and H₃ fall below a minimum value H_{min,1} during a time interval ΔT_{min,1},
or **in that** the vehicle lights are switched on when
- the vehicle speed is greater than zero and the average value formed from the brightness values H₁, H₂ and H₃ falls below a minimum value H_{min,1} within a driving distance S₁ or
- the vehicle speed is greater than zero and the average value of the brightness value H₂ is less than the average value of the brightness value H₁ by an amount ΔH_{min,1} and within a driving distance S₁ the average value of the brightness value H₃ is more than the average value of the brightness value H₂ by less than an amount ΔH_{min,2}, or
- the driving speed is equal to zero, the ignition is switched on and the average value formed from the brightness values H₁, H₂ and H₃ falls below a minimum value H_{min,1} during a time interval ΔT_{min,1},
and **in that** the vehicle lights are switched off when the vehicle speed is greater than zero and the brightness values H₁, H₂ and H₃ exceed a minimum value H_{min,2} within a driving distance S₁, or
- the driving speed is equal to zero, the ignition is switched on and the brightness values H₁, H₂ and H₃ exceed a minimum value H_{min,2} during a time interval ΔT_{min,2},
or **in that** the vehicle lights are switched off when the vehicle speed is greater than zero and the average values of the brightness values H₁, H₂ and H₃ exceed a minimum value H_{min,2} within a driving distance S₁, or
- the driving speed is equal to zero, the ignition is switched on and the average values of the brightness values H₁, H₂ and H₃ exceed a minimum value H_{min,2} during a time interval ΔT_{min,2},
or **in that** the vehicle lights are switched off when the vehicle speed is greater than zero and the average value formed from the brightness values H₁, H₂ and H₃ exceeds a minimum value H_{min,2} within a driving distance S₁, or
- the driving speed is equal to zero, the ignition is switched on and the average value formed from the brightness values H₁, H₂ and H₃ exceeds a minimum value H_{min,2} during a time interval ΔT_{min,2}.

2. Method according to Claim 1, **characterized in that** the average value formed from the brightness values H₁, H₂ and H₃ is weighted, and **in that** the brightness value H₁ is in this case given the largest weight.

3. Device for carrying out a method according to one of the preceding claims, having a first light sensor which determines the average brightness in the vicinity of the vehicle (11), a second light sensor which determines the average brightness in the driving direction (11), the first light sensor determining the average brightness H₁ of incident light rays inside a cone with a large cone angle, the second light sensor determining the average brightness H₂ of the incident light rays inside a cone with a small cone angle, and having a light control unit which switches the vehicle lights on and off, **characterized in that** the lateral surface (6, 7) of the second cone outside its cone apex lies inside the lateral surface (4, 5) of the first cone, **in that** a third light sensor is provided which determines the average brightness H₃ of the incident light rays inside a cone with a small cone angle, **in that** the lateral surface (8, 9) of the third cone outside its cone apex lies inside the lateral surface (4, 5) of the first cone, **in that** the longitudinal axes (2, 3) of the second and third cones form a small angle between them, and **in that** the light control unit switches the vehicle lights on and off by a method according to one of the preceding claims.

4. Device according to Claim 3, **characterized in that** the cone angle of the first cone is more than 10°.

5. Device according to one of Claims 3 and 4, **characterized in that** the cone angle of the first cone is 28°.

6. Device according to one of Claims 3 to 5, **characterized in that** the cone angle of the second cone is less than 5°.

7. Device according to one of Claims 5 to 6, **characterized in that** the cone angle of the second cone is 1.2°.

8. Device according to one of Claims 3 to 7, **characterized in that** the cone angle of the third cone is less than 5°.

9. Device according to one of Claims 3 to 8, **characterized in that** the cone angle of the third cone is 1.2°.

10. Device according to one of Claims 3 to 9, **characterized in that** the longitudinal axes of the first and second cones extend parallel.

11. Device according to one of Claims 3 to 10, **characterized in that** the angle between the longitudinal axes of the second and third cones is less than 5°.

12. Device according to one of Claims 3 to 11, **characterized in that** ΔH_{min,1} is the product of a factor between zero and one multiplied by the brightness value H₁.

13. Device according to one of Claims 3 to 12, **characterized in that** ΔH_{min,2} is the product of a factor between zero and one multiplied by the brightness value H₂.

14. Device according to one of Claims 3 to 13, **characterized in that** the brightness value H_{min,1} and the brightness value H_{min,2} are freely selectable.

15. Device according to one of Claims 3 to 14, **characterized in that** the brightness values H₁, H₂ and H₃ are evaluated in a time interval ΔT.

16. Vehicle having a device according to one of Claims 3 to 15, **characterized in that** the longitudinal axes of the first and second cones extend in the direction of the vehicle's longitudinal axis, and **in that** the longitudinal axis of the third cone in plan view extends in the direction of the vehicle's longitudinal axis.

17. Vehicle having a device according to one of Claims 3 to 15, **characterized in that** the longitudinal axes of the first and second cones extend in the driving direction, and **in that** the longitudinal axis of the third cone in plan view extends in the driving direction.

18. Vehicle having a device according to one of Claims 3 to 15, **characterized in that** the longitudinal axes of the first and second cones extend in the rolling direction of the steered wheels, and **in that** the longitudinal axis of the third cone in plan view extends in the rolling direction of the steered wheels.

## Revendications

1. Procédé pour l'allumage ou l'extinction automatique des feux d'un véhicule (11), dans lequel on détecte une clarté moyenne H₁ à l'intérieur d'un premier cône situé devant le véhicule dans la direction de conduite, ayant un grand angle de conicité, dont la pointe se situe dans le véhicule (11), et dans lequel on détecte une clarté moyenne H₂ dans un deuxième cône, dont la pointe se situe également dans le véhicule (11), dont le deuxième cône se situe devant le véhicule (11) dans la direction de conduite, et dont l'angle de conicité est inférieur au premier angle de conicité, et dans lequel, si les valeurs de clarté moyennes détectées ne sont pas atteintes ou sont excédées, les feux du véhicule sont allumés ou éteints,
**caractérisé en ce que**
l'on détecte la clarté moyenne H₃ à l'intérieur d'un troisième cône situé devant le véhicule dans la direction de conduite, dont la pointe se situe dans le véhicule (11), **en ce que** le troisième angle de conicité est inférieur au premier angle de conicité, **en ce que** l'axe longitudinal (3) du troisième cône augmente dans la direction de conduite en vue de côté par rapport à l'axe longitudinal (2) du deuxième cône, **en ce que** la surface d'enveloppe (8, 9) du troisième cône en dehors de sa pointe se trouve à l'intérieur de la surface d'enveloppe (4, 5) du premier cône, **en ce que** la vitesse du véhicule est détectée,
**en ce que** les feux du véhicule sont allumés lorsque :
- la vitesse de conduite est supérieure à zéro et que les valeurs de clarté H₁, H₂ et H₃ sur une distance de conduite S₁ sont en dessous d'une valeur minimale H_{min,1} ou que
- la vitesse de conduite est supérieure à zéro et que la valeur de clarté H₂ est inférieure à la valeur de clarté H₁ de ΔH_{min,1} et que sur une distance de conduite S₁, la valeur de clarté H₃ est supérieure à la valeur de clarté H₂ de moins de ΔH_{min,2}, ou que
- la vitesse de conduite est nulle, que le moteur tourne et que les valeurs de clarté H₁, H₂ et H₃ sont inférieures à une valeur minimale H_{min,1} pendant un intervalle de temps ΔT_{min,1},
ou **en ce que** les feux du véhicule sont allumés lorsque :
- la vitesse de conduite est supérieure à zéro et que les valeurs moyennes des valeurs de clarté H₁, H₂ et H₃ sont inférieures à une valeur minimale H_{min,1} sur une distance de conduite S₁
ou que
- la vitesse de conduite est supérieure à zéro et que la valeur moyenne de la valeur de clarté H₂ est inférieure à la valeur moyenne de la valeur de clarté H₁ de ΔH_{min,1} et que la valeur moyenne de la valeur de clarté H₃ est supérieure sur une distance de conduite S₁ à la valeur moyenne de la valeur de clarté H₂ de moins de ΔH_{min,2}, ou que
- la vitesse de conduite est nulle, que le moteur tourne et que les valeurs moyennes des valeurs de clarté H₁, H₂ et H₃ sont inférieures à une valeur minimale H_{min,1} pendant un intervalle de temps ΔT_{min,1},
ou **en ce que** les feux du véhicule sont allumés lorsque :
- la vitesse de conduite est supérieure à zéro et que la valeur moyenne formée à partir des valeurs de clarté H₁, H₂, H₃ est inférieure à une valeur minimale H_{min,1} sur une distance de conduite S₁ ou que
- la vitesse de conduite est supérieure à zéro et que la valeur moyenne de la valeur de clarté H₂ est inférieure de ΔH_{min,1} à la valeur moyenne de la valeur de clarté H₁, et que sur une distance de conduite S₁, la valeur moyenne de la valeur de clarté H₃ est supérieure à la valeur moyenne de la valeur de clarté H₂ de moins de ΔH_{min,2}, ou que
- la vitesse de conduite est nulle, le moteur tourne et la valeur moyenne formée à partir des valeurs de clarté H₁, H₂ et H₃ est inférieure à une valeur minimale H_{min,1} pendant un intervalle de temps ΔT_{min,1},
et **en ce que** les feux du véhicule sont éteints lorsque
- la vitesse de conduite est supérieure à zéro et que les valeurs de clarté H₁, H₂ et H₃ dépassent une valeur minimale H_{min,2} sur une distance de conduite S₁, ou que
- la vitesse de conduite est nulle, que le moteur tourne et que les valeurs de clarté H₁, H₂ et H₃ dépassent une valeur minimale H_{min,2} pendant un intervalle de temps ΔT_{min,2},
ou **en ce que** les feux du véhicule sont éteints lorsque
- la vitesse de conduite est supérieure à zéro et que les valeurs moyennes des valeurs de clarté H₁, H₂ et H₃ dépassent une valeur minimale H_{min,2} sur une distance de conduite S₁, ou que
- la vitesse de conduite est nulle, le moteur tourne et les valeurs moyennes des valeurs de clarté H₁, H₂ et H₃ dépassent une valeur minimale H_{min,2} pendant un intervalle de temps ΔT_{min,2}
ou **en ce que** les feux du véhicule sont éteints lorsque
- la vitesse de conduite est supérieure à zéro et que la valeur moyenne formée à partir des valeurs de clarté H₁, H₂ et H₃ dépasse une valeur minimale H_{min,2} sur une distance de conduite S₁, ou que
- la vitesse de conduite est nulle, le moteur tourne et la valeur moyenne formée à partir des valeurs de clarté H₁, H₂ et H₃ dépasse une valeur minimale H_{min,2} pendant un intervalle de temps ΔT_{min,2}.

2. Procédé selon la revendication 1, **caractérisé en ce que** la valeur moyenne formée à partir des valeurs de clarté H₁, H₂ et H₃ est pondérée et **en ce que** le poids le plus important est affecté à la valeur de clarté H₁.

3. Dispositif pour mettre en oeuvre un procédé selon l'une quelconque des revendications précédentes, comprenant un premier capteur de lumière, qui détecte la clarté moyenne dans l'environnement du véhicule (11), un deuxième capteur de lumière qui détecte la clarté moyenne dans la direction de conduite (11), le premier capteur de lumière détectant la clarté moyenne H₁ des faisceaux lumineux incidents à l'intérieur d'un cône ayant un grand angle de conicité, le deuxième capteur de lumière détectant la clarté moyenne H₂ des faisceaux lumineux incidents à l'intérieur d'un cône ayant un petit angle de conicité, et comprenant un appareil de commande d'éclairage qui allume et éteint les feux du véhicule, **caractérisé en ce que** la surface d'enveloppe (6, 7) du deuxième cône l'extérieur de sa pointe de cône est située à l'intérieur de la surface d'enveloppe (4, 5) du premier cône, **en ce qu'**il est prévu un troisième capteur de lumière, qui détecte la clarté moyenne H₃ des faisceaux lumineux incidents à l'intérieur d'un cône ayant un petit angle de conicité, **en ce que** la surface d'enveloppe (8, 9) du troisième cône à l'extérieur de sa pointe de cône est située à l'intérieur de la surface d'enveloppe (4, 5) du premier cône, **en ce que** les axes longitudinaux (2, 3) du deuxième et du troisième cône forment un petit angle et **en ce que** l'appareil de commande d'éclairage allume et éteint les feux du véhicule en fonction d'un procédé selon l'une quelconque des revendications précédentes.

4. Dispositif selon la revendication 3, **caractérisé en ce que** l'angle de conicité du premier cône est supérieur à 10°.

5. Dispositif selon l'une quelconque des revendications 3 ou 4, **caractérisé en ce que** l'angle de conicité du premier cône vaut 28°.

6. Dispositif selon l'une quelconque des revendications 3 à 5, **caractérisé en ce que** l'angle de conicité du deuxième cône est inférieur à 5°.

7. Dispositif selon l'une quelconque des revendications 5 à 6, **caractérisé en ce que** l'angle de conicité du deuxième cône vaut 1,2°.

8. Dispositif selon l'une quelconque des revendications 3 à 7, **caractérisé en ce que** l'angle de conicité du troisième cône est inférieur à 5°.

9. Dispositif selon l'une quelconque des revendications 3 à 8, **caractérisé en ce que** l'angle de conicité du troisième cône vaut 1,2°.

10. Dispositif selon l'une quelconque des revendications 3 à 9, **caractérisé en ce que** les axes longitudinaux du premier et du deuxième cône s'étendent parallèlement.

11. Dispositif selon l'une quelconque des revendications 3 à 10, **caractérisé en ce que** l'angle entre les axes longitudinaux du deuxième et du troisième cône est inférieur à 5°.

12. Dispositif selon l'une quelconque des revendications 3 à 11, **caractérisé en ce que** ΔH_{min,1} est le produit d'un facteur compris entre 0 et 1 et de la valeur de clarté H₁.

13. Dispositif selon l'une quelconque des revendications 3 à 12, **caractérisé en ce que** ΔH_{min,2} est le produit d'un facteur compris entre 0 et 1 et de la valeur de clarté H₂.

14. Dispositif selon l'une quelconque des revendications 3 à 13, **caractérisé en ce que** la valeur de clarté H_{min,1} et la valeur de clarté H_{min,2} peuvent être choisies librement.

15. Dispositif selon l'une quelconque des revendications 3 à 14, **caractérisé en ce que** les valeurs de clarté H₁, H₂ et H₃ sont analysées pendant un intervalle de temps ΔT.

16. Véhicule comprenant un dispositif selon l'une quelconque des revendications 3 à 15, **caractérisé en ce que** les axes longitudinaux du premier et du deuxième cône s'étendent dans la direction de l'axe longitudinal du véhicule, et **en ce que** l'axe longitudinal du troisième cône s'étend, en vue de dessus, dans la direction de l'axe longitudinal du véhicule.

17. Véhicule comprenant un dispositif selon l'une quelconque des revendications 3 à 15, **caractérisé en ce que** les axes longitudinaux du premier et du deuxième cône s'étendent dans la direction de conduite et **en ce que** l'axe longitudinal du troisième cône s'étend, en vue de dessus, dans la direction de conduite.

18. Véhicule comprenant un dispositif selon l'une quelconque des revendications 3 à 15, **caractérisé en ce que** les axes longitudinaux du premier et du deuxième cône s'étendent dans la direction de roulement des roues dirigées et **en ce que** l'axe longitudinal du troisième cône s'étend, en vue de dessus, dans la direction de roulement des roues dirigées.
